# EUROPEAN PATENT APPLICATION

(11) **EP 4 491 769 A1**
(43) Date of publication of application: **15.01.2025**
(21) Application number: 22930635.2
(22) Date of filing: 02.12.2022
(51) Int. Cl.: C25B 15/02, C25B 1/04

(54) **NEW ENERGY HYDROGEN PRODUCTION CONTROL METHOD AND APPARATUS AND ELECTRONIC DEVICE**

(30) Priority: 07.03.2022 CN 202210223708
(71) Applicant: Sungrow Hydrogen Sci.&Tech. Co., Ltd., Hefei 230088, Anhui (CN)
(72) Inventor: LI, Jiangsong, Hefei, Anhui 230088 (CN); SUN, Longlin, Hefei, Anhui 230088 (CN)
(74) Representative: Epping - Hermann - Fischer
(86) International application number: PCT/CN2022/136260
(87) International publication number: WO 2023/169012

(57) **Abstract**

Disclosed in the present invention is a new energy hydrogen production control method and apparatus and an electronic device. The method comprises: when a new energy hydrogen production system meets a preset mode conversion condition, the preset mode conversion condition being that the oxygen concentration in hydrogen is higher than a first purity limit and/or the hydrogen concentration in oxygen is higher than a second purity limit, converting the new energy hydrogen production system into a standby mode from a working mode, inputting a target voltage smaller than a decomposition voltage of an electrolyzer into the electrolyzer, enabling the electrolyzer to work in a capacitive area to keep electrode activity, and enabling the temperature of the electrolyzer to reach a preset temperature threshold. In the present invention, when the oxygen concentration in hydrogen is higher than the first purity limit and/or the hydrogen concentration in oxygen is higher than the second purity limit, the new energy hydrogen production system enters the standby mode, the target voltage is used to keep the electrolyzer to be in the capacitive state, frequent startup and shutdown of the electrolyzer are avoided, the temperature of the electrolyzer reaches the preset temperature threshold, such that the electrolyzer can quickly respond when the new energy power is increased, thereby avoiding further large-range temperature rise.

## Description

The present application claims priority to Chinese Patent Application No.202210223708.8, titled "NEW ENERGY HYDROGEN PRODUCTION CONTROL METHOD AND APPARATUS AND ELECTRONIC DEVICE", filed on March 7, 2022 with the China National Intellectual Property Administration, which is incorporated herein by reference in its entirety.

### FIELD

The present disclosure relates to the technical field of hydrogen production, and in particular to a control method and apparatus for renewable energy hydrogen production and an electronic device.

### BACKGROUND

Traditional water electrolysis for hydrogen production is under a constant power in the grid power, and the power source of the electrolyzer is stable. However, for renewable energy hydrogen production, the power input from a renewable energy source to the electrolyzer fluctuates, especially the wind power, whose fluctuations are particularly second-level fluctuations, thus bringing challenges to the stability of the hydrogen production system.

Due to the diaphragm characteristics of the electrolyte, the electrolyzer has the problem of excessive oxygen concentration in hydrogen and excessive hydrogen concentration in oxygen. Therefore, in order to solve the problem of excessive oxygen concentration in hydrogen and excessive hydrogen concentration in oxygen, the power supply of the electrolyzer needs to be shut down. When the power of the renewable energy source increases, the electrolyzer is turned on again. Therefore, the electrolyzer is frequently switched on and off, which affects the service life and performance of the electrolyzer. In addition, when the power supply of the electrolyzer is turned off, the temperature of the electrolyzer will decrease. When the power of the renewable energy source increases, the temperature of the electrolyzer increases again, which not only causes the electrolyzer to be in a state of thermal expansion and contraction, but also causes a waste of energy, reducing the economy of hydrogen production.

### SUMMARY

In view of this, in the present disclosure, a control method and apparatus for renewable energy hydrogen production and an electronic device are disclosed, so as to put the electrolyzer in a capacitive state to avoid frequent switching on and off of the electrolyzer, improve the service life and performance of the electrolyzer. By making the temperature of the electrolyzer reach the preset temperature threshold, the electrolyzer is allowed to respond quickly when the power of the renewable energy source increases and a repeated large-scale temperature rise is avoided. Therefore, the electrolyzer is effectively prevented from being in a state of thermal expansion and contraction, the energy is saved and the economy of hydrogen production is improved.

Provided is a control method for renewable energy hydrogen production, comprising:
switching a mode of a renewable energy hydrogen production system from a working mode to a standby mode when the renewable energy hydrogen production system meets a preset mode switching condition; and
inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold; where
the preset mode switching condition is that an oxygen concentration in hydrogen is greater than a first purity limit and/or a hydrogen concentration in oxygen is greater than a second purity limit.

Optionally, the inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold comprises:
inputting the target voltage to the electrolyzer to ensure that the electrolyzer works within the capacitive region to maintain the electrode activity; and
heating an electrolyte with a heating power to ensure that the temperature of the electrolyzer reaches the preset temperature threshold, where the heating power is determined based on the target voltage.

Optionally, the target voltage is outputted by a hydrogen production power source.

Optionally, the inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold comprises:
inputting the target voltage to the electrolyzer to ensure that the electrolyzer works within the capacitive region to maintain the electrode activity; and
heating an electrolyte through a preset heating method to ensure that the temperature of the electrolyzer reaches the preset temperature threshold.

Optionally, the preset heating method includes: heating with an alkali heater; or increasing or keeping an ambient temperature of the renewable energy hydrogen production system to a preset ambient temperature range.

Provided is a control apparatus for renewable energy hydrogen production, comprising:
a mode switching unit, configured to switch a mode of a renewable energy hydrogen production system from a working mode to a standby mode when the renewable energy hydrogen production system meets a preset mode switching condition; and
a heating unit, configured to input to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold; where
the preset mode switching condition is that an oxygen concentration in hydrogen is greater than a first purity limit and/or a hydrogen concentration in oxygen is greater than a second purity limit.

Optionally, the heating unit comprises:
a first voltage input sub-unit, configured to input the target voltage to the electrolyzer, so as to ensure that the electrolyzer works within the capacitive region to maintain the electrode activity; and
a first heating sub-unit, configured to heat an electrolyte with a heating power to ensure that the temperature of the electrolyzer reaches the preset temperature threshold, where the heating power is determined based on the target voltage.

Optionally, the heating unit comprises:
a second voltage input sub-unit, configured to input the target voltage to the electrolyzer, so as to ensure that the electrolyzer works within the capacitive region to maintain the electrode activity; and
a second heating sub-unit, configured to heat an electrolyte through a preset heating method to ensure that the temperature of the electrolyzer reaches the preset temperature threshold.

Optionally, the control apparatus further comprises:
a renewable energy power generation unit, configured to input the target voltage to the electrolyzer.

Provided is an electronic device, comprising a memory and a processor, where
the memory is configured to store at least one instruction; and
the processor is configured to execute the at least one instruction to implement the control method described above.

It can be seen from the above technical solution that a control method and apparatus for renewable energy hydrogen production and an electronic device are disclosed in the present disclosure. The mode of a renewable energy hydrogen production system is switched from a working mode to a standby mode when the renewable energy hydrogen production system meets a preset mode switching condition, where the preset mode switching condition is that an oxygen concentration in hydrogen is greater than a first purity limit and/or a hydrogen concentration in oxygen is greater than a second purity limit; and a target voltage is input to an electrolyzer, where the target voltage is less than a decomposition voltage of the electrolyzer, so as to ensure that the electrolyzer works within a capacitive region to maintain an electrode activity, and to ensure that a temperature of the electrolyzer reaches a preset temperature threshold. In the present disclosure, when the oxygen concentration in hydrogen is greater than the first purity limit and/or the hydrogen concentration in oxygen is greater than the second purity limit, a standby mode is added to the renewable energy hydrogen production system. In this standby mode, due to the influence of the layered capacitance of the electrolyzer, the target voltage can make the electrolyzer as a whole exhibit large capacitance characteristics, to allow the electrolyzer to work in the capacitive region to maintain electrode activity. At the same time, the target voltage input to the electrolyzer is less than the decomposition voltage of the electrolyzer, so that the electrolyzer will not produce hydrogen, to maintain the electrolyzer in a capacitive state, avoid frequent switching on and off of the electrolyzer, and improve the service life and performance of the electrolyzer. In addition, by making the temperature of the electrolyzer reach the preset temperature threshold, the electrolyzer can respond quickly when the renewable energy power increases and a repeated large-scale temperature rise is avoided, thus effectively avoiding the situation that the electrolyzer is in a state of thermal expansion and contraction, saving the energy and improving the economy of hydrogen production.

### BRIEF DESCRIPTION OF THE DRAWINGS

For more clearly illustrating the technical solutions in the embodiments of the present disclosure or in the conventional technology, the drawings referred to for describing the embodiments or the conventional technology will be briefly described hereinafter. Apparently, the drawings in the following description are only embodiments of the present disclosure, and for those skilled in the art, other drawings may be obtained based on the provided drawings without any creative effort.
Figure 1 is a flowchart of a control method for renewable energy hydrogen production disclosed in an embodiment of the present disclosure;
Figure 2 is a flowchart of another control method for renewable energy hydrogen production disclosed in an embodiment of the present disclosure;
Figure 3 is a flowchart of another control method for renewable energy hydrogen production disclosed in an embodiment of the present disclosure;
Figure 4 is a schematic structural diagram of a control apparatus for renewable energy hydrogen production disclosed in an embodiment of the present disclosure; and
Figure 5 is a schematic structural diagram of an electronic device disclosed in an embodiment of the present disclosure.

### DETAILED DESCRIPTION

Technical solutions of embodiments of the present disclosure are clearly and completely described hereinafter in conjunction with the drawings of the embodiments of the present disclosure. Apparently, the embodiments described in the following are only some embodiments of the present disclosure, rather than all embodiments. Any other embodiments obtained by those skilled in the art based on the embodiments in the present disclosure without any creative work fall into the protection scope of the present disclosure.

A control method and apparatus for renewable energy hydrogen production and an electronic device are disclosed in the present disclosure. The mode of a renewable energy hydrogen production system is switched from a working mode to a standby mode when the renewable energy hydrogen production system meets a preset mode switching condition, where the preset mode switching condition is that an oxygen concentration in hydrogen is greater than a first purity limit and/or a hydrogen concentration in oxygen is greater than a second purity limit; and a target voltage is input to an electrolyzer, where the target voltage is less than a decomposition voltage of the electrolyzer, so as to ensure that the electrolyzer works within a capacitive region to maintain an electrode activity, and to ensure that a temperature of the electrolyzer reaches a preset temperature threshold. In the present disclosure, when the oxygen concentration in hydrogen is greater than the first purity limit and/or the hydrogen concentration in oxygen is greater than the second purity limit, a standby mode is added to the renewable energy hydrogen production system. In this standby mode, due to the influence of the layered capacitance of the electrolyzer, the target voltage can make the electrolyzer as a whole exhibit large capacitance characteristics, so that the electrolyzer works in the capacitive region to maintain electrode activity. At the same time, the target voltage input to the electrolyzer is less than the decomposition voltage of the electrolyzer, so that the electrolyzer will not produce hydrogen, to maintain the electrolyzer in a capacitive state, avoid frequent switching on and off of the electrolyzer, and improve the service life and performance of the electrolyzer. In addition, by making the temperature of the electrolyzer reach the preset temperature threshold, the electrolyzer can respond quickly when the renewable energy power increases, to avoid a repeated large-scale temperature rise, thus effectively avoid the situation that the electrolyzer is in a state of thermal expansion and contraction, save the energy and improve the economy of hydrogen production.

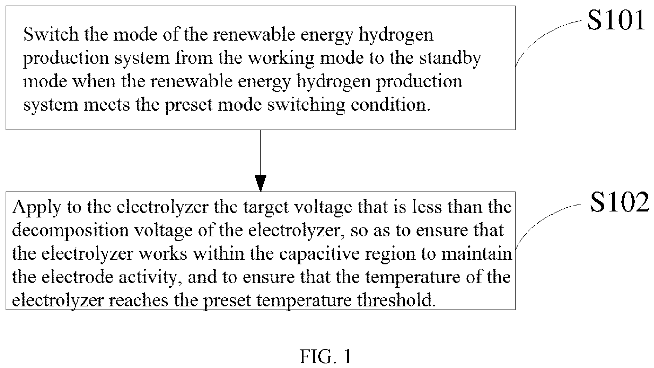

Reference is made to Figure 1, which is a flowchart of a control method for renewable energy hydrogen production disclosed in an embodiment of the present disclosure. The method comprises
step S101: switching a mode of a renewable energy hydrogen production system from a working mode to a standby mode when the renewable energy hydrogen production system meets a preset mode switching condition; and
step S102: inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold.

In step S101, the preset mode switching condition is that the oxygen concentration in hydrogen is greater than the first purity limit and/or the hydrogen concentration in oxygen is greater than the second purity limit. The value of the first purity limit and the second purity limit may be the same or different, depending on the actual status of the electrolyzer, and it is not limited in the present disclosure.

In practical applications, the reasons causing the oxygen concentration in hydrogen being greater than the first purity limit and/or the hydrogen concentration in oxygen being greater than the second purity limit include, but are not limited to, the renewable energy power input to the electrolyzer being lower than the lower limit of the electrolyzer power.

In step S 102, the electrolyzer may be an alkaline electrolyzer, a PEM (Proton Exchange Membrane) electrolyzer, etc, depending on the actual needs of the electrolyzer, and it is not limited in the present disclosure.

The decomposition voltage of the electrolyzer refers to the decomposition voltage of the electrolyte in the electrolyzer. The decomposition voltage of a single cell in the electrolyzer is generally 1.23V, and the decomposition voltage of 10 cells is 12.3V

The capacitive region refers to a region that the input voltage of the electrolyzer is less than the decomposition voltage of the electrolyzer.

The value of the preset temperature threshold is determined according to actual needs, such as 95°C, and it is not limited in the present disclosure.

In summary, a control method for renewable energy hydrogen production is disclosed in the present disclosure. The mode of a renewable energy hydrogen production system is switched from a working mode to a standby mode when the renewable energy hydrogen production system meets a preset mode switching condition, where the preset mode switching condition is that an oxygen concentration in hydrogen is greater than a first purity limit and/or a hydrogen concentration in oxygen is greater than a second purity limit; and a target voltage is input to an electrolyzer, where the target voltage is less than a decomposition voltage of the electrolyzer, so as to ensure that the electrolyzer works within a capacitive region to maintain an electrode activity, and to ensure that a temperature of the electrolyzer reaches a preset temperature threshold. In the present disclosure, when the oxygen concentration in hydrogen is greater than the first purity limit and/or the hydrogen concentration in oxygen is greater than the second purity limit, a standby mode is added to the renewable energy hydrogen production system. In this standby mode, due to the influence of the layered capacitance of the electrolyzer, the target voltage can make the electrolyzer as a whole exhibit large capacitance characteristics, so that the electrolyzer works in the capacitive region to maintain electrode activity. At the same time, the target voltage input to the electrolyzer is less than the decomposition voltage of the electrolyzer, so that the electrolyzer will not produce hydrogen, to maintain the electrolyzer in a capacitive state, avoid frequent switching on and off of the electrolyzer, and improve the service life and performance of the electrolyzer. In addition, by making the temperature of the electrolyzer reach the preset temperature threshold, the electrolyzer can respond quickly when the renewable energy power increases, to avoid a repeated large-scale temperature rise, thus effectively avoid the situation that the electrolyzer is in a state of thermal expansion and contraction, save the energy and improve the economy of hydrogen production.

In practical applications, when heating the electrolyte, direct heating of the electrolyte and/or indirect heating of the electrolyte may be adopted. Specific examples are as follows.

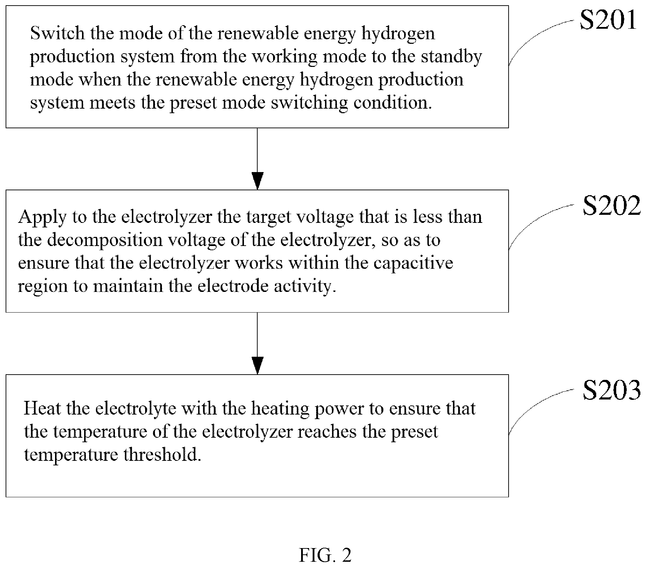

Reference is made to Figure 2, which is a flowchart of another control method for renewable energy hydrogen production disclosed in an embodiment of the present disclosure. The method comprises:
step S201: switching a mode of a renewable energy hydrogen production system from a working mode to a standby mode when the renewable energy hydrogen production system meets a preset mode switching condition;
step S202: inputting to an electrolyzer a target voltage that is less than a decomposition voltage of the electrolyzer, so as to ensure that the electrolyzer works within a capacitive region to maintain an electrode activity; and
step S203: heating an electrolyte with a heating power to ensure that the temperature of the electrolyzer reaches the preset temperature threshold.

In step S201, the preset mode switching condition is that the oxygen concentration in hydrogen is greater than the first purity limit and/or the hydrogen concentration in oxygen is greater than the second purity limit. The value of the first purity limit and the second purity limit may be the same or different, depending on the actual status of the electrolyzer, and it is not limited in the present disclosure.

In step S203, the heating power is determined based on the target voltage. In practical applications, when using the power produced by the target voltage to heat the electrolyte, it is necessary to ensure that the target voltage is less than the decomposition voltage of the electrolyzer, it is also necessary to ensure that the power produced by the target voltage is sufficient to heat the electrolyte so that the preset temperature threshold is reached. The specific value of the target voltage is determined according to actual needs, and it is not limited in the present disclosure.

The target voltage in this embodiment may be output by a hydrogen production power source, and the hydrogen production power source may be a photovoltaic power source, a wind power source, etc.

The value of the preset temperature threshold is determined according to actual needs, and it is not limited in the present disclosure.

In summary, it can be seen that in the present disclosure, when the renewable energy hydrogen production system enters the standby mode, the target voltage less than the decomposition voltage of the electrolyzer is input to the electrolyzer. Due to the influence of the layered capacitance of the electrolyzer, the target voltage can make the electrolyzer as a whole exhibit large capacitance characteristics, so that the electrolyzer works in the capacitive region to maintain electrode activity. Since the target voltage input to the electrolyzer is less than the decomposition voltage of the electrolyzer, the electrolyzer will not produce hydrogen, to maintain the electrolyzer in a capacitive state, avoid frequent switching on and off of the electrolyzer, and improve the service life and performance of the electrolyzer. At the same time, the power produced by the target voltage keeps heating the electrolyte to ensure that the temperature of the electrolyzer reaches the preset temperature threshold, so that the electrolyzer can respond quickly when the renewable energy power increases, to avoid a repeated large-scale temperature rise, save the energy, and improve the economy of hydrogen production.

It should be noted that when the renewable energy hydrogen production system is working in the standby mode, the voltage input by the hydrogen production power source to the electrolyzer will actually be reduced below the decomposition voltage of the electrolyzer (generally about 70% of the rated voltage of the electrolyzer, depending on the electrolyzer). When the voltage input from the hydrogen production power source to the electrolyzer does not drop to 0, a target voltage that is less than the decomposition voltage of the electrolyzer may be input to the electrolyzer to heat the electrolyte. When the target voltage input from the hydrogen production power source to the electrolyzer is low, the power produced by the target voltage will not be able to make the temperature of the electrolyzer quickly reach the preset temperature threshold. At this time, the following heating method is adopted.

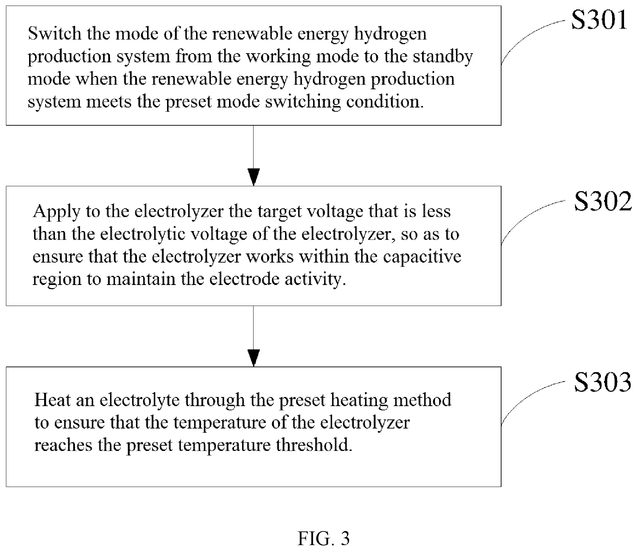

In order to optimize the above embodiments, reference is made to Figure 3, which is a flowchart of another control method for renewable energy hydrogen production disclosed in an embodiment of the present disclosure. The method comprises:
step S301: switching a mode of a renewable energy hydrogen production system from a working mode to a standby mode when the renewable energy hydrogen production system meets a preset mode switching condition;
step S302: inputting to an electrolyzer a target voltage that is less than a decomposition voltage of the electrolyzer, so as to ensure that the electrolyzer works within a capacitive region to maintain an electrode activity; and
step S303: heating an electrolyte through a preset heating method to ensure that the temperature of the electrolyzer reaches the preset temperature threshold.

In step S301, the preset mode switching condition is that the oxygen concentration in hydrogen is greater than the first purity limit and/or the hydrogen concentration in oxygen is greater than the second purity limit. The value of the first purity limit and the second purity limit may be the same or different, depending on the actual status of the electrolyzer, and it is not limited in the present disclosure.

In step S303, the preset heating method includes: heating with an alkali heater; or increasing or keeping an ambient temperature of the renewable energy hydrogen production system to a preset ambient temperature range.

Specifically, in practical applications, direct heating of the electrolyte may be achieved by using the alkali heater. Specifically, the alkali heater is placed into the electrolyte to achieve direct heating of the electrolyte. The power supply of the alkali heater may be provided by the hydrogen production power source.

Indirect heating of the electrolyte may also be achieved by increasing or keeping the ambient temperature of the renewable energy hydrogen production system within a preset ambient temperature range. The value of the preset ambient temperature range is determined according to actual needs, and it is not limited in the present disclosure.

The methods of increasing or keeping the ambient temperature of the renewable energy hydrogen production system include but are not limited to using air conditioners to increase or keep the ambient temperature of the renewable energy hydrogen production system.

In summary, it can be seen that in the present disclosure, when the renewable energy hydrogen production system enters the standby mode, a preset heating method is adopted to heat the electrolyte, and thus the temperature of the electrolyzer can quickly reach the preset temperature threshold, so that the electrolyzer can respond quickly when the renewable energy power increases, to avoid repeated large-scale temperature rise, saves the energy and improves the economy of hydrogen production.

Corresponding to the embodiments of the above method, a control apparatus for renewable energy hydrogen production is also disclosed in the present disclosure.

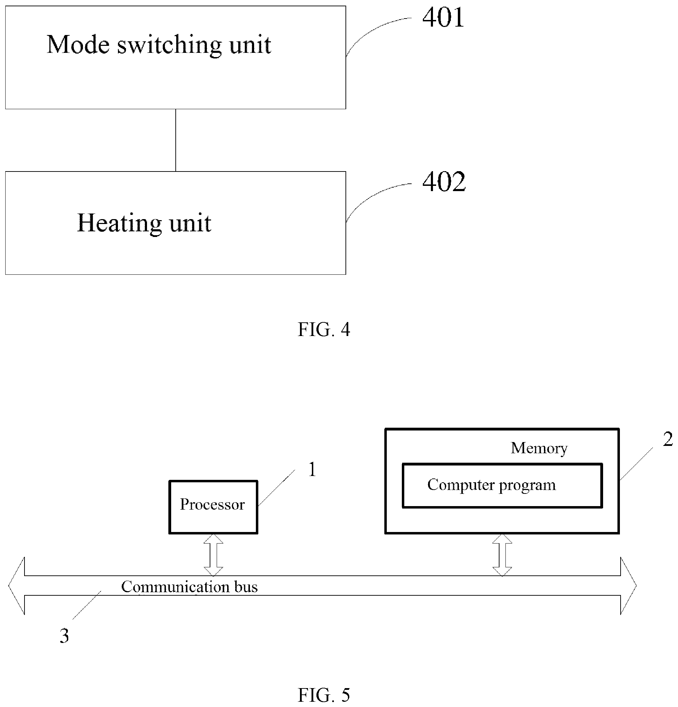

Reference is made to Figure 4, which is a schematic structural diagram of a control apparatus for renewable energy hydrogen production disclosed in an embodiment of the present disclosure. The apparatus comprises:
a mode switching unit 401, configured to switch a mode of a renewable energy hydrogen production system from a working mode to a standby mode when the renewable energy hydrogen production system meets a preset mode switching condition; and
a heating unit 402, configured to input to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold.

In the mode switching unit 401, the preset mode switching condition is that an oxygen concentration in hydrogen is greater than a first purity limit and/or a hydrogen concentration in oxygen is greater than a second purity limit. The value of the first purity limit and the second purity limit may be the same or different, depending on the actual status of the electrolyzer, and it is not limited in the present disclosure.

In practical applications, the reasons causing the oxygen concentration in hydrogen being greater than the first purity limit and/or the hydrogen concentration in oxygen being greater than the second purity limit include, but are not limited to, the renewable energy power input to the electrolyzer being lower than the lower limit of the electrolyzer power.

In the mode switching unit 402, when heating the electrolyte, direct heating of the electrolyte and/or indirect heating of the electrolyte may be adopted, depending on actual needs, and it is not limited in the present disclosure.

The value of the preset temperature threshold is determined according to actual needs, such as 95°C, and it is not limited in the present disclosure.

In summary, it can be seen that a control apparatus for renewable energy hydrogen production is disclosed in the present disclosure. The mode of a renewable energy hydrogen production system is switched from a working mode to a standby mode when the renewable energy hydrogen production system meets a preset mode switching condition, where the preset mode switching condition is that an oxygen concentration in hydrogen is greater than a first purity limit and/or a hydrogen concentration in oxygen is greater than a second purity limit; and a target voltage is input to an electrolyzer, where the target voltage is less than a decomposition voltage of the electrolyzer, so as to ensure that the electrolyzer works within a capacitive region to maintain an electrode activity, and to ensure that a temperature of the electrolyzer reaches a preset temperature threshold. In the present disclosure, when the oxygen concentration in hydrogen is greater than the first purity limit and/or the hydrogen concentration in oxygen is greater than the second purity limit, a standby mode is added to the renewable energy hydrogen production system. In this standby mode, due to the influence of the layered capacitance of the electrolyzer, the target voltage can make the electrolyzer as a whole exhibit large capacitance characteristics, so that the electrolyzer works in the capacitive region to maintain electrode activity. At the same time, the target voltage input to the electrolyzer is less than the decomposition voltage of the electrolyzer, so that the electrolyzer will not produce hydrogen, to maintain the electrolyzer in a capacitive state, avoid frequent switching on and off of the electrolyzer, and improve the service life and performance of the electrolyzer. In addition, by making the temperature of the electrolyzer reach the preset temperature threshold, the electrolyzer can respond quickly when the renewable energy power increases, to avoid a repeated large-scale temperature rise, thus effectively avoid the situation that the electrolyzer is in a state of thermal expansion and contraction, save the energy and improve the economy of hydrogen production.

In practical applications, when heating the electrolyte, direct heating of the electrolyte and/or indirect heating of the electrolyte may be adopted, the specific examples are as follows.

The heating unit 402 specifically comprises:
a first voltage input sub-unit, configured to input the target voltage to the electrolyzer, so as to ensure that the electrolyzer works within the capacitive region to maintain the electrode activity; and
a first heating sub-unit, configured to heat an electrolyte with a heating power to ensure that the temperature of the electrolyzer reaches the preset temperature threshold, where the heating power is determined based on the target voltage.

The target voltage in this embodiment may be output by a hydrogen production power source, and the hydrogen production power source may be a photovoltaic power source, a wind power source, etc.

The value of the preset temperature threshold is determined according to actual needs, and it is not limited in the present disclosure.

In summary, it can be seen that in the present disclosure, when the renewable energy hydrogen production system enters the standby mode, a target voltage less than the decomposition voltage of the electrolyzer is input to the electrolyzer. Due to the influence of the layered capacitance of the electrolyzer, the target voltage can make the electrolyzer as a whole exhibit large capacitance characteristics, to allow the electrolyzer to work in the capacitive region to maintain electrode activity. Since the target voltage input to the electrolyzer is less than the decomposition voltage of the electrolyzer, the electrolyzer will not produce hydrogen, to maintain the electrolyzer in a capacitive state, avoid frequent switching on and off of the electrolyzer, and improve the service life and performance of the electrolyzer. At the same time, the power produced by the target voltage keeps heating the electrolyte to ensure that the temperature of the electrolyzer reaches the preset temperature threshold, so that the electrolyzer can respond quickly when the renewable energy power increases, to avoid a repeated large-scale temperature rise, save the energy and improve the economy of hydrogen production.

It should be noted that when the renewable energy hydrogen production system is working in the standby mode, the voltage input by the hydrogen production power source to the electrolyzer will actually be reduced below the decomposition voltage of the electrolyzer (generally about 70% of the rated voltage of the electrolyzer, depending on the electrolyzer). When the voltage input from the hydrogen production power source to the electrolyzer does not drop to 0, a target voltage less than the decomposition voltage of the electrolyzer may be input to the electrolyzer to heat the electrolyte. When the target voltage input from the hydrogen production power source to the electrolyzer is low, or even drops to 0, the power produced by the target voltage will not be able to make the temperature of the electrolyzer quickly reach the preset temperature threshold. At this time, the following heating method is adopted.

In order to further optimize the above embodiment, the heating unit 402 specifically comprises:
a second voltage input sub-unit, configured to input the target voltage to the electrolyzer, so as to ensure that the electrolyzer works within the capacitive region to maintain the electrode activity; and
a second heating sub-unit, configured to heat an electrolyte through a preset heating method to ensure that the temperature of the electrolyzer reaches the preset temperature threshold.

The preset heating method includes: heating with an alkali heater; or increasing or keeping an ambient temperature of the renewable energy hydrogen production system to a preset ambient temperature range.

Specifically, in practical applications, direct heating of the electrolyte may be achieved by using the alkali heater. Specifically, the alkali heater is placed into the electrolyte to achieve direct heating of the electrolyte. The power supply of the alkali heater may be provided by the hydrogen production power source.

Indirect heating of the electrolyte may also be achieved by increasing or keeping the ambient temperature of the renewable energy hydrogen production system within a preset ambient temperature range. The value of the preset ambient temperature range is determined according to actual needs, and it is not limited in the present disclosure.

The methods of increasing or keeping the ambient temperature of the renewable energy hydrogen production system include but are not limited to using air conditioners to increase or keep the ambient temperature of the renewable energy hydrogen production system.

In summary, it can be seen that in the present disclosure, when the renewable energy hydrogen production system enters the standby mode, a preset heating method is adopted to heat the electrolyte, and thus the temperature of the electrolyzer can quickly reach the preset temperature threshold, so that the electrolyzer can respond quickly when the renewable energy power increases, to avoid repeated large-scale temperature rise, save the energy and improve the economy of hydrogen production.

In order to optimize the above embodiment, the control apparatus further includes:
a renewable energy power generation unit, configured to input the target voltage to the electrolyzer, where the target voltage is less than the decomposition voltage of the electrolyzer.

Corresponding to the above embodiment, as shown in Figure 5, an electronic device is provided in the present disclosure. The electronic device comprises a memory 1 and a processor 2.

The processor 1 and the memory 2 communicate with each other through the communication bus 3.

The processor 1 is configured to execute at least one instruction.

The memory 2 is configured to store at least one instruction.

The processor 1 may be a central processing unit CPU, or an application specific integrated circuit (ASIC), or one or more integrated circuits configured to implement embodiments of the present disclosure.

The memory 2 may include high-speed RAM memory, and may also include non-volatile memory, such as at least one disk memory.

The processor executes at least one instruction to implement the following functions:
switching a mode of a renewable energy hydrogen production system from a working mode to a standby mode when the renewable energy hydrogen production system meets a preset mode switching condition; and
inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold; where
the preset mode switching condition is that an oxygen concentration in hydrogen is greater than a first purity limit and/or a hydrogen concentration in oxygen is greater than a second purity limit.

In summary, it can be seen that an electronic device is disclosed in the present disclosure. The mode of a renewable energy hydrogen production system is switched from a working mode to a standby mode when the renewable energy hydrogen production system meets a preset mode switching condition, where the preset mode switching condition is that an oxygen concentration in hydrogen is greater than a first purity limit and/or a hydrogen concentration in oxygen is greater than a second purity limit; and a target voltage is input to an electrolyzer, where the target voltage is less than a decomposition voltage of the electrolyzer, so as to ensure that the electrolyzer works within a capacitive region to maintain an electrode activity, and to ensure that a temperature of the electrolyzer reaches a preset temperature threshold. In the present disclosure, when the oxygen concentration in hydrogen is greater than the first purity limit and/or the hydrogen concentration in oxygen is greater than the second purity limit, a standby mode is added to the renewable energy hydrogen production system. In this standby mode, due to the influence of the layered capacitance of the electrolyzer, the target voltage can make the electrolyzer as a whole exhibit large capacitance characteristics, so that the electrolyzer works in the capacitive region to maintain electrode activity. At the same time, the target voltage input to the electrolyzer is less than the decomposition voltage of the electrolyzer, so that the electrolyzer will not produce hydrogen, to maintain the electrolyzer in a capacitive state, avoid frequent switching on and off of the electrolyzer, and improve the service life and performance of the electrolyzer. In addition, by making the temperature of the electrolyzer reach the preset temperature threshold, the electrolyzer can respond quickly when the renewable energy power increases, to avoid a repeated large-scale temperature rise, thus effectively avoid the situation that the electrolyzer is in a state of thermal expansion and contraction, save the energy and improve the economy of hydrogen production.

Corresponding to the above embodiment, a computer-readable storage medium is also disclosed in the present disclosure. The computer-readable storage medium stores at least one instruction, and the at least one instruction is executed by the processor to achieve the functions as follows:
switching a mode of a renewable energy hydrogen production system from a working mode to a standby mode when the renewable energy hydrogen production system meets a preset mode switching condition; and
inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold; where
the preset mode switching condition is that an oxygen concentration in hydrogen is greater than a first purity limit and/or a hydrogen concentration in oxygen is greater than a second purity limit.

In summary, it can be seen that a computer-readable storage medium is disclosed in the present disclosure. The mode of a renewable energy hydrogen production system is switched from a working mode to a standby mode when the renewable energy hydrogen production system meets a preset mode switching condition, where the preset mode switching condition is that an oxygen concentration in hydrogen is greater than a first purity limit and/or a hydrogen concentration in oxygen is greater than a second purity limit, and a target voltage is input to an electrolyzer, where the target voltage is less than a decomposition voltage of the electrolyzer, so as to ensure that the electrolyzer works within a capacitive region to maintain an electrode activity, and to ensure that a temperature of the electrolyzer reaches a preset temperature threshold. In the present disclosure, when the oxygen concentration in hydrogen is greater than the first purity limit and/or the hydrogen concentration in oxygen is greater than the second purity limit, a standby mode is added to the renewable energy hydrogen production system. In this standby mode, due to the influence of the layered capacitance of the electrolyzer, the target voltage can make the electrolyzer as a whole exhibit large capacitance characteristics, so that the electrolyzer works in the capacitive region to maintain electrode activity. At the same time, the target voltage input to the electrolyzer is less than the decomposition voltage of the electrolyzer, so that the electrolyzer will not produce hydrogen, to maintain the electrolyzer in a capacitive state, avoid frequent switching on and off of the electrolyzer, and improve the service life and performance of the electrolyzer. In addition, by making the temperature of the electrolyzer reach the preset temperature threshold, the electrolyzer can respond quickly when the renewable energy power increases, to avoid a repeated large-scale temperature rise, thus effectively avoid the situation that the electrolyzer is in a state of thermal expansion and contraction, save the energy and improve the economy of hydrogen production.

It should be noted that for the specific working principles of the electronic device and the computer-readable storage medium, reference can be made to the corresponding sections of the embodiments of the method, which will not be repeated here.

It should be noted that, in this disclosure, relational terms such as first and second are merely used to distinguish an entity from other entities and do not require or imply that there are any such actual relationships or sequences between these entities. Moreover, the terms "comprise", "include", or any other variants thereof are intended to encompass a non-exclusive inclusion, such that the process, method, article, or device including a series of elements includes not only those elements but also those elements that are not explicitly listed, or elements that are inherent to such process, method, article, or device. Unless explicitly limited, an element defined by the statement "including a ..." does not exclude the presence of additional identical elements in the process, the method, the article or the device that include the stated element.

The above embodiments are described in a progressive manner. Each of the embodiments mainly focuses on its differences from other embodiments. The same and similar parts between the various embodiments can be referred to each other.

The above description of the disclosed embodiments enables those skilled in the art to implement or use the present disclosure. Multiple modifications to these embodiments are apparent for those skilled in the art, and general principles defined herein may be implemented in other embodiments without departing from the spirit or scope of the present disclosure. Therefore, the present disclosure should not be limited to the embodiments disclosed herein, but has the widest scope in accordance to the principle and the novel features disclosed herein.

## Claims

1. A control method for renewable energy hydrogen production, comprising:
switching a mode of a renewable energy hydrogen production system from a working mode to a standby mode when the renewable energy hydrogen production system meets a preset mode switching condition; and
inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold; wherein
the preset mode switching condition is that an oxygen concentration in hydrogen is greater than a first purity limit and/or a hydrogen concentration in oxygen is greater than a second purity limit.

2. The control method according to claim 1, wherein the inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold comprises:
inputting the target voltage to the electrolyzer to ensure that the electrolyzer works within the capacitive region to maintain the electrode activity; and
heating an electrolyte with a heating power to ensure that the temperature of the electrolyzer reaches the preset temperature threshold, wherein the heating power is determined based on the target voltage.

3. The control method according to claim 1, wherein the target voltage is outputted by a hydrogen production power source.

4. The control method according to claim 1, wherein the inputting to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold comprises:
inputting the target voltage to the electrolyzer to ensure that the electrolyzer works within the capacitive region to maintain the electrode activity; and
heating an electrolyte through a preset heating method to ensure that the temperature of the electrolyzer reaches the preset temperature threshold.

5. The control method according to claim 4, wherein the preset heating method comprises:
heating with an alkali heater; or
increasing or keeping an ambient temperature of the renewable energy hydrogen production system to a preset ambient temperature range.

6. A control apparatus for renewable energy hydrogen production, comprising:
a mode switching unit, configured to switch a mode of a renewable energy hydrogen production system from a working mode to a standby mode when the renewable energy hydrogen production system meets a preset mode switching condition; and
a heating unit, configured to input to an electrolyzer a target voltage that is less than a decomposition voltage of the electrolyzer, so as to ensure that the electrolyzer works within a capacitive region to maintain an electrode activity, and to ensure that a temperature of the electrolyzer reaches a preset temperature threshold; wherein
the preset mode switching condition is that an oxygen concentration in hydrogen is greater than a first purity limit and/or a hydrogen concentration in oxygen is greater than a second purity limit.

7. The control apparatus according to claim 6, wherein the heating unit comprises:
a first voltage input sub-unit, configured to input the target voltage to the electrolyzer, so as to ensure that the electrolyzer works within the capacitive region to maintain the electrode activity; and
a first heating sub-unit, configured to heat an electrolyte with a heating power to ensure that the temperature of the electrolyzer reaches the preset temperature threshold, wherein the heating power is determined based on the target voltage.

8. The control apparatus according to claim 6, wherein the heating unit comprises:
a second voltage input sub-unit, configured to input the target voltage to the electrolyzer, so as to ensure that the electrolyzer works within the capacitive region to maintain the electrode activity; and
a second heating sub-unit, configured to heat an electrolyte through a preset heating method to ensure that the temperature of the electrolyzer reaches the preset temperature threshold.

9. The control apparatus according to claim 6, further comprising:
a renewable energy power generation unit, configured to input the target voltage to the electrolyzer.

10. An electronic device, comprising a memory and a processor, wherein
the memory is configured to store at least one instruction; and
the processor is configured to execute the at least one instruction to implement the control method according to any one of claims 1 to 5.
